# FASCICULE DE BREVET EUROPEEN

(11) **EP 2 938 985 B1**
(45) Date de publication et mention de la délivrance du brevet: **05.12.2018**
(21) Numéro de dépôt: 13818349.6
(22) Date de dépôt: 18.12.2013
(51) Int. Cl.: G01L 7/06, G01L 11/02

(54) **MICROBAROMÈTRE À SOUFFLET ET À TRANSDUCTEUR INTERFÉROMÉTRIQUE**
MIKROBAROMETER MIT BALG UND EINEM INTERFEROMETRISCHEN WANDLER
MICRO-BAROMETER WITH BELOWS AND INTERFEROMETRIC TRANSDUCER

(30) Priorité: 27.12.2012 FR 1262878
(43) Date de publication de la demande: 04.11.2015
(73) Titulaire: Commissariat à l'Energie Atomique et aux Energies Alternatives, 75015 Paris (FR)
(72) Inventeur: OLIVIER, Serge, 91680 Bruyeres Le Chatel (FR); PONCEAU, Damien, 92160 Antony (FR)
(74) Mandataire: Santarelli
(86) Numéro de dépôt international: PCT/FR2013/053168
(87) Numéro de publication internationale: WO 2014/102486

(56) Documents cités:
- WO-A1-96/02820
- WO-A1-03/046498
- US-A- 4 665 747
- US-A1- 2011 098 950
- D. Ponceau, L. Bosca: "Low-noise broad band microbarometers", Infrasound Monitoring for Atmospheric Studies , 2009, pages 119-140, XP002714250, DOI: 10.1007/978-1-4020-9508-5 ISBN: 978-1-4020-9507-8 Extrait de l'Internet: URL:http://books.google.nl/books?id=lXdPbC EkV9sC&printsec=frontcover&source=gbs_ge_s ummary_r&cad=0#v=onepage&q&f=false [extrait le 2013-10-03]

## Description

### Domaine d'application

L'invention concerne les microbaromètres à soufflet.

Ces instruments sont classiquement utilisés pour la mesure des ondes infrasonores encore appelées infrasons, c'est-à-dire de très faibles variations de pression (typiquement comprises dans la gamme allant du millipascal à la centaine de pascals) dont la fréquence est inférieure à 20 Hz ; ces instruments mesurent la forme des ondes plus que l'intensité du signal correspondant. Ces instruments sont d'un type très différent de celui des baromètres, qui mesurent la pression atmosphérique, c'est-à-dire des valeurs de l'ordre de 10⁵ Pa, avec une précision de l'ordre de la centaine, voire du millier de pascals.

Des ondes infrasonores sont notamment produites par des événements, naturels ou non, dont la liste suivante (non exhaustive) donne une idée de l'étendue des applications : étude des éruptions volcaniques, étude et surveillance de la rentrée atmosphérique de météorites ou de satellites en fin de vie, décompte et localisation des avalanches, surveillance des explosions nucléaires, mesure des ondes de gravité induites par les mouvements de convection dans l'atmosphère, études de modèles atmosphériques, études des bruits inaudibles générés par les éoliennes, les trains, les avions, les métros.

Les ondes infrasonores du fait de leurs très basses fréquences ont la propriété de se propager sur de longues distances dans les différentes couches de l'atmosphère en étant nettement moins atténuées que les ondes dans le domaine audible : plusieurs fois le tour de la Terre pour des phénomènes très énergétiques comme les explosions nucléaires, plusieurs milliers de kilomètres pour certains phénomènes naturels comme les éruptions volcaniques.

Pour mesurer efficacement les ondes infrasonores, les microbaromètres doivent avoir les performances suivantes :
- sensibilité de l'ordre du mPa, soit 10⁻⁸ en dessous de la pression atmosphérique ambiante
- bruit intrinsèque inférieur au bruit minimum mesuré à la surface de la Terre,
- bande passante permettant de couvrir les bandes de détection utile (0,001 Hz à 10 Hz) et si possible la pression statique absolue du lieu;
- réponse plate dans la bande passante,
- dynamique de mesure la plus grande possible pour détecter tous les phénomènes sans avoir besoin de filtrer les basses fréquences (ondes de gravité), voire la composante continue qui est la pression du lieu, variable en fonction de l'altitude,
- fréquence de résonance qui doit être située hors de la bande de détection,
- très faible influence de la température externe sur le capteur, qui se confondrait alors à des ondes basses fréquences.

### Art antérieur

Les microbaromètres à soufflet existent depuis environ 50 ans. Ils utilisent le principe de la mesure barométrique pour accéder aux variations de pression de zéro à 20 Hz. La pression de référence est un vide primaire enfermé dans une capsule anaérobie en forme de soufflet généralement disposée verticalement sur un socle. Toute variation de pression déforme ce soufflet en générant un déplacement linéaire de sa partie haute. Dans les technologies existantes, ce déplacement est mesuré par un capteur électromagnétique de type LVDT (acronyme anglo-saxon pour "Linear Variable Differential Transformer"), c'est-à-dire un capteur électrique passif (inductif) de déplacements linéaires, ainsi que cela est décrit notamment dans la publication "LDG microbarometers : description and performances- Network design- Gérard Ruzié - Ghislain Claque- CTBTO Informai infrasound workshop May 2 to 4, 1996 CEA Bruyères-le-Châtel France" Un microbaromètre employant un capteur capacitif est décrit dans la publication "Infrasound Monitoring for Atmospheric Studies" par A. Le Pichon et autres, 2009, ISBN 978-1-4020-9507-8.

Les microbaromètres à soufflet, associés à leurs capteurs électromagnétiques, ont été optimisés pendant plusieurs décennies par les spécialistes des ondes infrasonores qui maîtrisent classiquement la mécanique de précision et l'électromagnétisme. C'est le cas des microbarographes de type MB 2000 et MB 2005 développés par le CEA depuis les années 70.

Malgré les nombreuses optimisations, les microbaromètres à soufflet actuels présentent une bande spectrale de mesure limitée, sont sensibles aux perturbations électromagnétiques et conservent une certaine sensibilité thermique du fait du montage.

### Présentation résumée de l'invention

L'invention a pour objet un microbaromètre dont la conception permet de dépasser ces limitations, en combinaison avec une aptitude à être utilisé en dehors d'un contexte de laboratoire, grâce à un faible encombrement global.

Elle propose à cet effet un microbaromètre à soufflet comportant :
- un socle de référence,
- un soufflet dont un bord est fixé à une surface de référence de ce socle, en présentant une direction d'allongement perpendiculaire à cette surface de référence,
- un couvercle fermant l'autre bord de ce soufflet en sorte de l'isoler de manière étanche vis-à-vis de l'extérieur, le soufflet étant mis dans des conditions dans lesquelles ses variations d'allongement sont directement proportionnelles aux variations de pression induites par des ondes infrasonores autour de lui,
- un élément réfléchissant solidaire de ce couvercle
- et un composant interférométrique adapté à pouvoir recevoir un faisceau à partir d'une source, solidaire de la surface de référence du socle en ayant une voie d'entrée-sortie en regard de l'élément réfléchissant, parallèlement à la direction d'allongement du soufflet, en sorte de pouvoir émettre vers cet élément une fraction de faisceau et capter ce faisceau après réflexion sur cet élément réfléchissant, ce composant comportant des lignes de guidage optique, des zones de séparation et de combinaison optique au sein d'un même substrat, en technologie intégrée, ce composant interférométrique étant formé d'un substrat en silice dont des zones ont été modifiées en sorte de former les dites lignes optiques, les zones de séparation et de combinaison.

Ainsi l'invention propose d'abandonner la technologie électromagnétique LVDT pratiquée depuis 50 ans par les spécialistes des micro-baromètres à soufflet en introduisant une technologie complètement différente. Pour cela l'invention préconise l'utilisation d'un transducteur interférométrique en lieu et place d'un transducteur électromagnétique, jusqu'à maintenant inconnue de l'homme de l'art dans le domaine des micro-baromètres à soufflet.

Il importe de noter que l'utilisation d'une technologie optique a déjà été envisagée pour une mesure de déplacement.

Ainsi, dans un domaine un peu différent, plusieurs laboratoires ont essayé d'utiliser une mesure interférométrique dans des sismomètres, comme décrit par exemple dans la publication Zumberge M., Berger J., Dzieciuch M.A., et Parker R.L., "Resolving quadrature fringes in real time", Applied Optics, Vol. 43, n°4, 2004. Il y est proposé un interféromètre de Michelson dans lequel deux signaux de franges en quadrature sont analysés en temps réel pour fournir un transducteur de déplacement à large bande et grande dynamique dont la résolution est de 5.10⁻¹³ m.Hz^{-1/2} à 2 Hz.

De tels interféromètres mettent en oeuvre une pluralité de lames de retard, de cubes séparateurs, de cubes réflecteurs, dans une configuration qui exige un réglage précis de chaque élément optique, ce qui les rend complexes à mettre en oeuvre, et fragiles vis-à-vis d'une utilisation sur le terrain pendant plusieurs années.

On peut penser que cette complexité et ces contraintes d'utilisation ont jusqu'à présent dissuadé les spécialistes du domaine des microbaromètres de s'intéresser à cette technologie.

A l'encontre de ce préjugé, l'invention préconise d'utiliser une technique optique particulière, à savoir une technologie dite d'optique intégrée, restée jusqu'à présent confinée dans les milieux scientifiques de l'optique notamment appliquée à des applications biologiques et de l'instrumentation astronomique (voir le document de Malbet F., Kern P., Schanen-Duport I., Berger J.-P., Rousselet-Perraut K. et Benech P. "Integrated optics for astronomical interferometry" I : Concept and astronomical applications. Astronomy and Astrophysics supplement, vol. 138, pp. 135-145, July 1999) ; il peut être ajouté que les circuits optiques qui étaient envisagés dans ces applications scientifiques présentaient un schéma de guides optiques et de mélange interférométrique bien différents de ceux impliqués par l'invention.

Plus précisément, l'invention préconise que la subdivision du faisceau initial en deux fractions, le guidage de l'une de ces fractions vers le miroir porté par le soufflet, la récupération de la fraction réfléchie et sa combinaison avec l'autre fraction avant de fournir en sortie des signaux d'interférométrie, soient réalisés par des guides optiques gravés dans un substrat, typiquement en silice, en utilisant les technologies de gravure à l'échelle micrométrique, voire nanométrique connues dans les microtechnologies (on parle aussi aujourd'hui de nanotechnologies).

On comprend que, puisque les divers éléments optiques (séparateurs, retardateurs, ou mélangeurs, ainsi que les chemins de guidage qui les relient) sont formés au sein d'un même substrat, leurs configurations individuelles peuvent être définies avec une grande précision de même que leur configuration relative, ce qui évite tout réglage ultérieur, tout en éliminant les risques de déréglage en cas d'utilisation en milieu perturbé, sur un terrain extérieur quelconque.

Cette technologie a en outre l'avantage de permettre une minimisation des dimensions ; un substrat optique intégrant les fonctions de séparation et de mélangeur peut avoir une taille centimétrique, donc intégrable dans un microbaromètre (voire au soufflet - voir ci-dessous).

Selon des caractéristiques optionnelles, éventuellement combinées :
- le soufflet est disposé entre la surface de référence et le composant interférométrique, l'élément réfléchissant étant monté sur la face externe du couvercle ; une telle configuration rend facile toute connexion avec des éléments extérieurs, notamment une source optique cohérente ou un dispositif de traitement,
- le composant interférométrique est rendu solidaire de la surface de référence par l'intermédiaire de colonnettes disposées autour du soufflet ; cela contribue à obtenir une bonne rigidité de l'ensemble, même en cas d'environnement perturbé,

- dans la configuration précitée, les colonnettes sont formées d'un mélange de métal et d'invar, suivant des proportions telles que leur coefficient de dilatation thermique perpendiculairement à la surface de référence est sensiblement égal à celui du soufflet ; cela permet d'obtenir des mesures sensiblement indépendantes des variations de la température environnante,
- selon une autre configuration, l'élément réfléchissant et le composant interférométrique en optique intégrée sont disposés à l'intérieur du soufflet, l'élément réfléchissant étant monté sur la face interne du couvercle et le composant interférométrique longeant la surface de référence du socle ; il en résulte une minimisation de l'encombrement ainsi qu'une préservation des éléments internes au soufflet vis-à-vis des agressions extérieures. Du fait de la disparition des colonnettes, cette configuration a aussi pour avantage tout à fait significatif de minimiser l'influence de la température sur la mesure,
- le composant interférométrique est formé selon l'invention d'un substrat en silice dont des zones ont été modifiées, par exemple par gravure, insolation et/ou diffusion d'ions, en sorte de former les dites lignes optiques, les zones de séparation et de combinaison ; cela revient à former des gradients d'indice, voire des discontinuités délimitant des guides optiques, à partir d'un substrat dont on maîtrise bien les propriétés dans le domaine des nanotechnologies,
- le microbaromètre comporte en outre un capot entourant le soufflet et le composant interférométrique, qui est fixé au socle et comporte des orifices d'entrée d'air extérieur à l'intérieur de l'enceinte constituée entre le capot et la surface de référence autour du soufflet, ainsi que des conduits de connexion adaptés à permettre une connexion optique à une source de rayonnement cohérent et monochromatique et à un dispositif de traitement de signaux interférométriques ; cette enceinte est isolée de l'extérieur de manière étanche, en dehors de ces orifices. Ce volume permet d'équilibrer la pression extérieure autour du soufflet, quelles que soient les perturbations dues au vent local. Ces orifices d'entrée d'air sont généralement reliés à des réseaux extérieurs de tuyaux de filtrage pour minimiser les faibles variations dues au vent local. Cela permet de garantir l'accès d'éventuelles variations de pression extérieure jusqu'au soufflet tout en le protégeant des poussières et condensations du milieu environnant,
- le composant interférométrique en optique intégrée comporte une entrée pour un signal d'entrée et quatre sorties, à savoir deux sorties de signaux interférométriques en quadrature, une sortie d'une fraction du signal d'entrée et une sortie du signal réfléchi par l'élément réfléchissant ; cela permet des traitements très précis des signaux d'interférence, d'où des évaluations précises des déplacements du couvercle du soufflet par rapport au socle et donc des variations de pression et des ondes infrasonores qui en sont à l'origine.
- l'élément réfléchissant est un miroir plan, ce qui est une forme particulièrement simple d'élément réfléchissant (même si bien d'autres formes sont possibles, notamment les oeil de chat ou les coins de cube),
- le volume du soufflet est à un vide primaire, ce qui met le soufflet en précontrainte et contribue à favoriser une bonne proportionnalité entre les variations de pression et les variations de longueur du soufflet qui en résultent, ainsi qu'à maintenir constante la pression interne au soufflet, même en cas de variation de température externe. On comprend toutefois que, au lieu d'un vide primaire, on peut amener le soufflet dans un régime élastique de déformation au moyen d'éléments de précontrainte de nature mécanique, par exemple sous la forme de ressorts.

### Description détaillée d'au moins un exemple de réalisation

Des objets, caractéristiques et avantages de l'invention ressortent de la description qui suit, donnée à titre d'exemple illustratif non limitatif, en regard des dessins annexés sur lesquels :
La figure 1 est un schéma de principe d'un microbaromètre selon l'invention, dans un premier exemple de réalisation, au sein d'un système optique complet,
La figure 2 est un schéma de principe d'un autre microbaromètre selon un autre exemple de réalisation de l'invention, au sein d'un système optique complet,
La figure 3 est un schéma de principe d'un composant d'optique intégrée pouvant être mis en oeuvre dans le micro-baromètre de l'une ou l'autre des figures 1 et 2,
La figure 4 est un schéma de principe d'un système complet d'interférométrie mis en oeuvre avec le microbaromètre des figures 1 ou 2, intégrant un bloc selon la revendication 3,
Les figures 5A à 5J représentent des étapes successives dans la formation du bloc de la figure 3,
La figure 6 est une vue en perspective d'un microbaromètre conforme au schéma de la figure 1, sans son capot, et
La figure 7 est une vue en perspective de ce microbaromètre avec son capot.

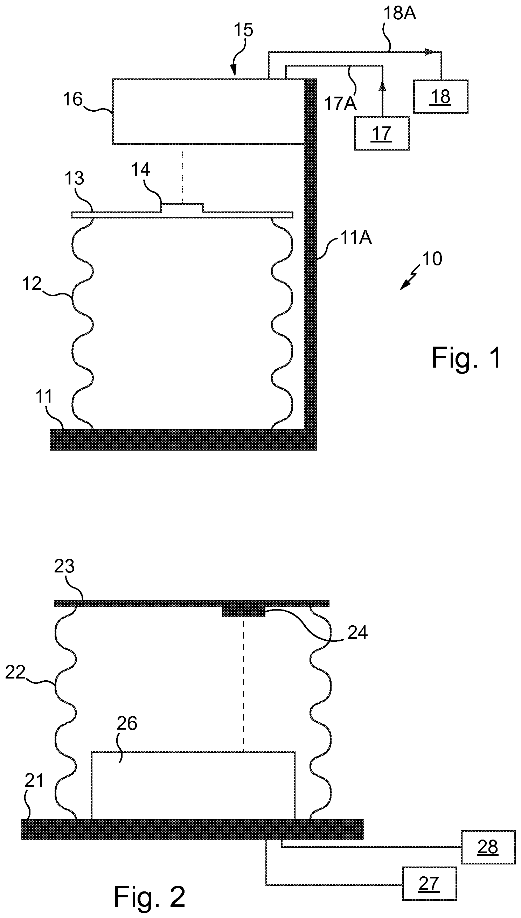

La figure 1 montre un schéma de principe d'un microbaromètre à soufflet et à transducteur optique selon un premier exemple de réalisation. Il est désigné sous la référence générale 10 et est constitué des éléments suivants :
- un socle 11 qui sert de référence à tout mouvement dans le capteur,
- un soufflet étanche en tôle ondulée 12 qui est adapté à se déformer linéairement par rapport au socle, en fonction des variations de pression entre l'intérieur et l'extérieur de son volume ; ce soufflet a un bord fixé de manière étanche au socle
- un disque plein formant un couvercle 13 qui ferme de manière étanche le soufflet à l'opposé du socle et "suit" en conséquence la déformation de celui-ci par rapport au socle,
- un miroir de mesure 14 collé sur le disque plein 3,
- un interféromètre optique (aussi appelé ici composant interférométrique) 15 qui est fixe par rapport au socle, en lui étant relié en pratique par des entretoises 11A ici appelées colonnettes, et qui est adapté à mesurer le déplacement du miroir 14 par rapport au socle. Ce composant interférométrique et le miroir associé forment ainsi un transducteur interférométrique de déplacement.

Ainsi que cela sera détaillé plus loin, l'interféromètre optique 15 comporte un bloc, ou composant, d'optique intégrée 16, une source de rayonnement 17 reliée au bloc 16 par un guide optique 17A et un dispositif de traitement 18 relié au bloc 16 par un guide optique (ou faisceau de guides optiques) 18A.

Dans sa définition minimale, le microbaromètre comporte le seul composant 16, la source 17 et le dispositif de traitement 18 pouvant être des accessoires qui ne sont connectés à cet ensemble minimal qu'au moment de périodes de fonctionnement. Ainsi qu'on le verra plus loin, le dispositif de traitement n'assure pas nécessairement un traitement en temps réel des signaux optiques reçus du composant optique, et peut se contenter de les stocker en vue d'une utilisation ultérieure.

La surface du socle à laquelle est fixé le soufflet (ici la surface supérieure du socle, celui-ci pouvant être posé en un quelconque endroit) constitue une surface de référence par rapport à laquelle le déplacement du couvercle du soufflet doit être mesuré ; cette surface est de préférence plane.

Le soufflet 12 a des propriétés élastiques ; c'est en effet l'élément sensible aux ondes infrasonores, plus exactement aux variations de pression associées à ces ondes infrasonores. C'est un cylindre formé d'une tôle ondulée fermée aux extrémités par le socle 11 d'un côté (sur la surface de référence de celui-ci) et par le disque plein 13 de l'autre côté.

La pression à l'intérieur du soufflet est une pression de référence par rapport à laquelle sont mesurées les variations de pression externe, du fait des ondes infrasonores.

De préférence, l'intérieur du soufflet est placé sous un vide primaire, ce qui a pour effet de mettre le soufflet en une configuration de précontrainte telle qu'il est placé dans son domaine élastique ; c'est un moyen efficace pour amener le soufflet en précontrainte de compression, dans son régime élastique de déformation, et garantir ainsi que toute variation de pression induite par des ondes infrasonores se traduit par un allongement (ou une restriction) qui lui est proportionnel. Ce vide primaire a aussi pour effet de définir une pression de référence qui reste constante par rapport à laquelle la mesure se fait. La différence de pression entre l'extérieur (généralement à la pression atmosphérique) et l'intérieur du soufflet définit un équilibre, et donc une position de référence du soufflet. Le soufflet doit donc être étanche à l'air pour conserver le vide primaire. On désigne ici par « pression atmosphérique » (on parle aussi parfois de pression ambiante) la pression qui règne à l'extérieur du soufflet, en l'absence de tout confinement significatif vis-à-vis du milieu où des ondes infrasonores sont susceptibles de se propager ; la valeur de cette pression, en dehors de tout infrason, peut aussi dépendre sensiblement de la température extérieure et de l'altitude de la mesure.

Le couvercle 13 est de même étanche à l'air ; les liaisons entre le soufflet avec le socle, d'une part, et le couvercle, d'autre part, sont également étanches.

Le miroir 14 est ici représenté sous la forme d'une plaque plane. De manière avantageuse, les caractéristiques de déformation du soufflet sont telles qu'une variation de la pression extérieure se traduit par une translation pure de ce couvercle sans rotation ; de la sorte le miroir 14 reste parallèle à lui-même dans toutes les configurations que le soufflet peut prendre et conserve à tout instant sa capacité à renvoyer dans une direction donnée un faisceau reçu en provenance de l'interféromètre optique. Toutefois, il y a des miroirs dont la géométrie permet d'échapper à cette condition, tels que les coins de cubes qui ont la propriété de renvoyer un faisceau exactement suivant la direction d'incidence.

L'interféromètre optique est représenté comme étant formé de trois éléments, à savoir une source optique cohérente 17, typiquement une source laser monochromatique, un bloc d'optique intégrée adapté à diriger une fraction du faisceau incident vers le miroir et à capter un faisceau réfléchi par celui-ci, à combiner des fractions des faisceaux incident et réfléchi, et à transmettre ces fractions vers le dispositif de traitement. Au moins le bloc 16 est fixe par rapport au socle ; il est toutefois possible de rendre l'ensemble de ces éléments fixe par rapport au socle.

Les entretoises 11A qui assurent la fixation de ce bloc par rapport au socle ont avantageusement un coefficient de dilatation, perpendiculairement à la surface de référence du socle, qui est le même que celui du soufflet ; cela permet de minimiser les effets des variations de température ambiante.

L'arrivée d'un signal infrason à proximité du soufflet se traduit par une variation de la pression atmosphérique. L'équilibre du soufflet 12 est alors modifié, ce qui a pour conséquence une variation de la position du disque 13 par rapport au socle 11. Mesurer un signal infrason revient donc à mesurer le déplacement du disque 13 par rapport à la surface de référence que forme le socle 11.

La spécificité du microbaromètre, par rapport aux microbaromètres connus, réside dans l'utilisation d'une technologie interférométrique pour réaliser la mesure du déplacement du disque 13. En effet, une combinaison est effectuée entre une fraction du rayonnement incident et une fraction du rayonnement réfléchi par le miroir 14 solidaire du couvercle du soufflet, ce qui donne des franges d'interférence ; celles-ci sont modifiées lorsque le miroir se déplace.

Selon une spécification complémentaire de l'invention, le guidage des fractions de rayonnement au sein de l'interféromètre est réalisé au sein d'un substrat modifié dans son volume, en sorte de former une optique intégrée ; cela sera développé plus loin.

La figure 2 présente une variante de ce premier microbaromètre à soufflet et à transducteur optique. Les éléments de ce microbaromètre qui sont équivalents à ceux de la figure 1 sont désignés par des signes de référence qui se déduisent de ceux de la figure 1 par addition du nombre 10.

Ainsi, ce second microbaromètre, désigné par la référence générale 20, comporte un socle 21, un soufflet 22, un couvercle 23 fermant le soufflet, et un miroir 24 porté par ce couvercle et un interféromètre comportant un bloc d'optique intégrée 26, une source laser 27 et un dispositif de traitement de signal 28.

A la différence du microbaromètre de la figure 1, le miroir et au moins le bloc d'optique intégrée sont situés à l'intérieur du soufflet ; plus précisément, le miroir 24 est fixé sur la face interne du soufflet, tandis que le bloc 26 , qui est fixe par rapport au socle comme dans l'exemple de la figure 1,est ici directement fixé à la surface de référence que présente le socle, à savoir sa face supérieure à laquelle le soufflet est fixé. Puisque, de manière avantageuse, le volume intérieur du soufflet est sous vide, il en découle que, d'une part ce miroir et ce bloc ne consomment aucun espace en dehors du soufflet, et d'autre part ce bloc ainsi que le miroir sont protégés vis-à-vis des agressions extérieures, tels que la poussière, la condensation ou les variations des propriétés optiques de l'air ambiant; il en résulte une bonne constance des performances du microbaromètre, avec une meilleure indépendance vis-à-vis de l'environnement. Un autre avantage est que, puisqu'il n'y a plus de colonnettes entre la surface de référence et le dispositif interférométrique, la sensibilité des mesures à la température est très fortement minimisée.

La mise en oeuvre d'un bloc d'optique dite "intégrée" a l'avantage que, contrairement aux systèmes optiques classiques, le faisceau émis par la source 27, ainsi que le faisceau réfléchi par le miroir, sont dirigés par des guides optiques réalisés dans la masse d'un substrat en silice, c'est-à-dire dans un matériau auquel on sait appliquer des techniques de dépôt-gravure ; cela permet de définir ce bloc sous l'appellation de "puce". Plus précisément ces guides optiques sont ici réalisés par transformation locale de la masse d'un substrat de silicium en sorte d'y définir des guides en silice.

Ces guides étant notamment gravés dans la silice, ils ont la propriété, avec l'ensemble du circuit qu'ils forment, d'être très stable dans le temps et peu sensibles aux contraintes extérieures, ce qui n'est pas le cas pour un montage optique classique.

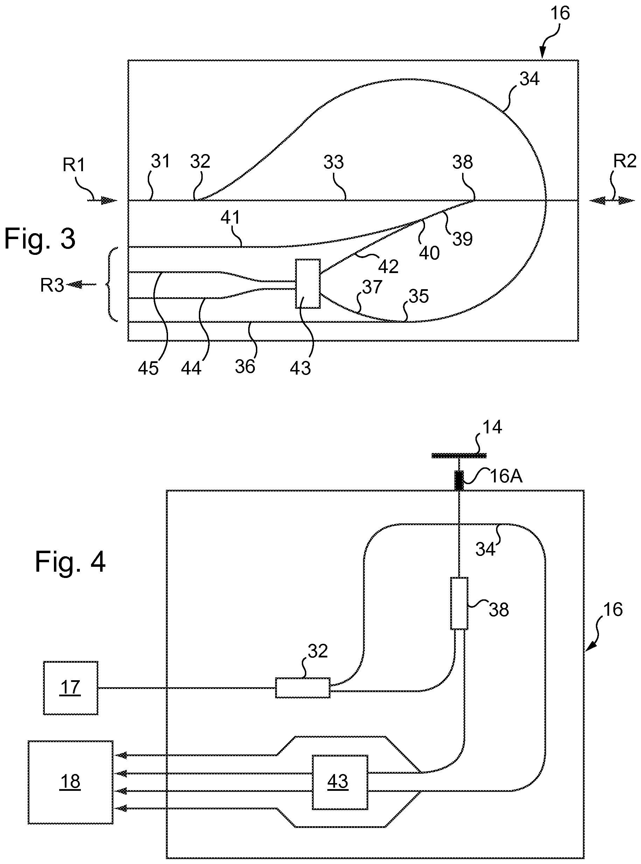

La figure 3 est un schéma de principe d'un exemple de composant d'interférométrie en optique guidée, dans lequel le trajet de la lumière est directement inscrit dans le composant ; on y distingue des zones en Y qui permettent de séparer un faisceau en deux, ainsi qu'une zone de mélange qui permet de combiner deux faisceaux en sorte de former des franges d'interférence.

Ce composant d'interférométrie comporte une ligne d'entrée 31 adaptée à recevoir un faisceau d'entrée, en principe à une fréquence donnée de sorte qu'il est monochromatique ; cette ligne d'entrée aboutit à une zone de séparation 32 où le faisceau incident se sépare en deux fractions qui suivent respectivement une ligne 34 de référence et une ligne 33 de circulation qui aboutit à un orifice destiné à être disposé en regard du miroir dont le déplacement est à détecter ; l'orientation de cette ligne auprès de l'orifice détermine la direction suivant laquelle la fraction de faisceau qui va être dirigée vers ce miroir l'interceptera. La fraction dirigée vers le miroir est de préférence plus importante que celle qui reste guidée à l'intérieur du composant, compte tenu des pertes qui se produisent à l'extérieur du composant entre celui-ci et le miroir.

La ligne de référence 34 se poursuit jusqu'à une zone de séparation 35 où la fraction de faisceau circulant dans la ligne 34 se sépare en deux fractions qui suivent respectivement une ligne 36 de référence en sortie et une première ligne 37 de mélange.

L'orifice de sortie de la ligne 33 est orienté en sorte de capter le rayonnement réfléchi par le miroir (il s'agit donc d'un orifice d'entrée-sortie) ; cette ligne 33 comporte une zone de séparation 38 configurée en sorte de faire diverger hors de cette ligne 33 la majeure partie du rayonnement réfléchi, suivant une ligne de détection 39 (une éventuelle fraction de ce rayonnement qui remonterait vers l'entrée de la ligne 31 ne participerait pas à la détection du déplacement du miroir).

Cette ligne de détection 39 aboutit à une zone de séparation 40 où le faisceau de la ligne 39 se sépare en deux fractions suivant respectivement une ligne 41 de détection en sortie et une seconde ligne 42 de mélange.

Les lignes de mélange 37 et 42 aboutissent à une zone de combinaison 43 où les faisceaux reçus suivant ces lignes se combinent pour faire des franges d'interférence (on parle de formation de figures d'interférences) ; de manière connue en soi, deux faisceaux combinés sont ainsi émis, en quadrature, suivant des lignes de mesure en sortie respectivement notées 44 et 45.

Il y a ainsi, à l'entrée de la ligne d'entrée, un faisceau incident noté R1, un faisceau émis et réfléchi noté R2, et un groupe de faisceaux de sortie notés conjointement R3. Il en découle que ce composant d'interférométrie ne se limite pas à la simple formation d'interférences puisqu'il assure en outre le guidage de diverses fractions vers, et en provenance, du miroir.

La figure 4 représente schématiquement le bloc de principe de la figure 3 dans un circuit optique faisant intervenir les autres éléments du micro-baromètre de la figure 1 (mais le bloc peut de même coopérer avec les éléments correspondants du micro-baromètre de la figure 2).

Ainsi, le bloc reçoit, à l'entrée de la ligne d'entrée 31, un faisceau émis par la source 17, en transmet une partie vers le miroir 14 et récupère ce faisceau partiel après sa réflexion par le miroir, puis sépare ce faisceau réfléchi entre une fraction directement envoyée vers le dispositif de traitement et une fraction appliquée à la zone de combinaison 43 ; par ailleurs, ce bloc transmet une autre partie du faisceau reçu à l'entrée vers la zone de séparation en sorte d'en envoyer une fraction directement vers le dispositif de traitement et une autre fraction vers la zone de combinaison 43. Le bloc émet de même les faisceaux combinés sortant de cette zone 43 vers le dispositif de traitement.

De manière avantageuse une lentille 16A est disposée à la sortie de la ligne d'entrée, en regard du miroir.

Ce dispositif de traitement analyse les variations constatées dans les franges interférométriques pour caractériser le déplacement du miroir qui est la cause de ces variations, et en déduire les variations de pression qui ont été la cause de ce déplacement. En variante le dispositif de traitement se limite à un dispositif de numérisation et de stockage (ou enregistrement) permettant ensuite, de manière indépendante et décalée, l'interprétation des signaux de sortie.

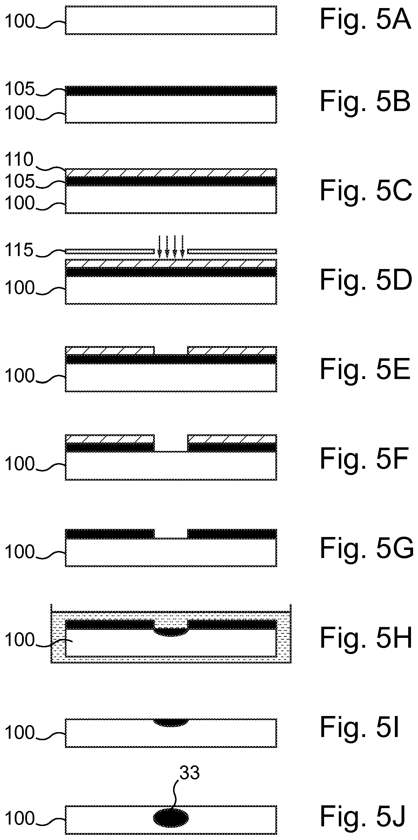

La fabrication d'une ligne optique telle que la ligne 33 est schématisée sur les figures 5A à 5J, conformes à ce qu'on peut trouver dans le document précité de Malbet et al.

On part d'un substrat homogène 100 (voir la figure 5A) dont on effectue un nettoyage par tout moyen approprié.

On forme ensuite une couche de protection 105 (voir la figure 5B) ; il s'agit par exemple d'une couche en aluminium formée par évaporation sous vide.

On forme ensuite une couche photo sensible 110, typiquement en résine (voir la figure 5C).

On applique ensuite une insolation de la couche 110, par exemple au moyen de rayons UV, au travers d'un masque 115 (voir la figure 5D).

On développe la résine, ce qui revient à éliminer la couche 110 aux emplacements où l'insolation a eu lieu (voir la figure 5E).

On procède alors à l'attaque de la couche de protection au travers des vides ainsi formés dans la couche photosensible (voir la figure 5F).

On enlève alors la couche photosensible (voir la figure 5G) puis on soumet le substrat 100 à l'action d'un bain fondu de composition appropriée, de manière à provoquer une diffusion ionique au travers des vides formés dans la couche de protection (voir la figure 5H). Lorsque le substrat 100 est en silice, les ions que l'on fait diffuser dans ce substrat sont des ions argent qui modifient localement les propriétés optiques de la silice.

Après avoir enlevé la couche de protection (voir la figure 5I), on recouvre la zone du substrat ainsi modifiée d'une couche telle que la zone modifiée se retrouve noyée au sein du substrat final. Cette zone modifiée forme alors un guide optique (voir la figure 5J). Le recouvrement de la zone modifiée peut être obtenu par dépôt par évaporation d'une couche du même matériau que celui qui constitue le substrat, ou par collage (typiquement par collage moléculaire) au substrat 100 d'un substrat complémentaire.

L'intérêt d'une telle technologie d'optique intégrée réside dans la simplicité d'utilisation. Contrairement à une technologie optique classique, le faisceau optique est complètement guidé dans le composant. De ce fait, aucun réglage n'est à faire a postériori. Il suffit d'avoir pu réaliser avec une précision suffisante les divers chemins optiques nécessaires du schéma de la figure 3.

Or il est apparu que cette technologie d'intégration de chemins optiques au sein du substrat permettait de former non seulement les lignes optiques mentionnées à propos des figures 3 ou 4, mais aussi les diverses zones de séparation (ce peut être de simples zones en Y) ou de combinaison, avec la précision nécessaire pour obtenir des franges de qualité dans la dernière partie du circuit optique.

### Exemple de réalisation

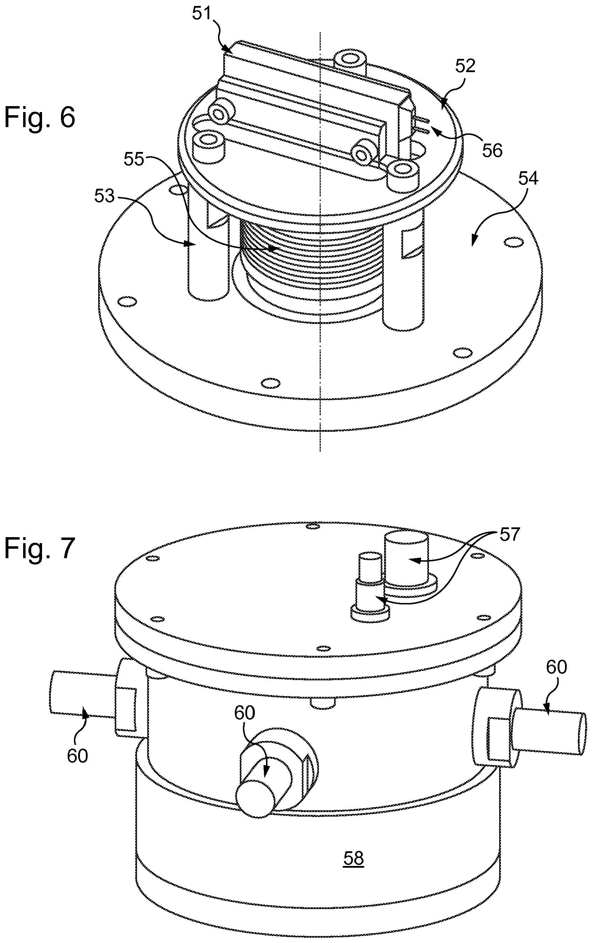

La figure 6 présente une vue en perspective d'un exemple de réalisation d'un microbaromètre à soufflet et à transducteur optique conforme à l'invention, capable de mesurer des variations de pression de zéro à 100 Hz.

Il est constitué des éléments suivants :
- un composant interférométrique 51 en optique intégrée conforme au schéma général de la figure 3,
- un support d'interféromètre 52 en Invar, afin de profiter du faible coefficient de dilatation de ce matériau pour minimiser les déformations thermiques de ce support,
- trois colonnettes bi-matériau 53, en aluminium et Invar, afin de minimiser les effets thermiques sur la mesure,
- un socle 54,
- un soufflet 55 sensible aux ondes infrasonores, en Invar afin de minimiser la dilatation thermique du soufflet,
- un disque plein, en aluminium, et un miroir de mesure (non visibles, car masqués par le support d'interféromètre).

Le lien entre le support d'interféromètre et le socle est fait par trois colonnettes bi matériau (5), en aluminium et Invar. La proportion relative des matériaux constitutifs des colonnettes, à savoir aluminium et invar, est avantageusement ajustée pour que leur dilatation soit identique à celle du soufflet 55. Ainsi, la déformation thermique du soufflet, et donc le déplacement du disque plein dû aux seuls effets thermiques sont identiques aux déplacements du support de l'interféromètre liés à la seule dilatation des colonnettes. L'effet de la température sur la mesure est minimisé.

L'interféromètre utilisé fonctionne avantageusement avec un rayonnement à 1550 nm, afin de profiter de la fiabilité des composants de télécommunications disponibles. Il comporte un composant formé en technologie dite d'optique intégrée, telle que décrite ci-dessus.

Le miroir est par exemple un miroir plan ainsi que cela a été indiqué à propos des figures 1 et 2. En variantes non représentées, il peut aussi s'agir d'un oeil de chat, ou d'un coin de cube ou de tout autre dispositif réfléchissant.

Deux signaux interférométriques en quadrature ainsi que des informations de photométrie sortent du substrat et peuvent sortir par l'une des voies optiques représentées sous la référence 56 (l'arrivée d'un faisceau provenant de la source optique se faisant par l'autre voie). Les signaux optiques en entrée et en sortie du substrat sont liés à l'extérieur par l'intermédiaire de fibres optiques (non représentées).

La figure 7 donne une vue extérieure du micro baromètre à soufflet et à transducteur optique de la figure 6 après mise en place d'un capot formant une enceinte 58 qui assure une homogénéisation de la pression atmosphérique autour du microbaromètre à soufflet et à transducteur optique, fixée à son socle. Ce capot comporte deux connecteurs optiques 57 qui permettent d'acheminer le signal optique provenant d'une source à 1550 nm, en entrée et en sortie, et quatre entrées d'air 60 qui font entrer la pression extérieure dans le capteur, de manière à ce que le soufflet soit soumis à cette pression extérieure ; un intérêt que ce capot soit fixé de façon étanche au socle est qu'ainsi au sein de l'enceinte le soufflet n'est sensible qu'aux seules variations de pression provenant des orifices d'entrée d'air extérieur . En variante, ce capot peut être fixé de manière indépendante du microbaromètre, par exemple à un socle tel que le microbaromètre soit situé à l'intérieur du volume ainsi délimité, tout en permettant une bonne étanchéité.

### Avantages de l'invention

Les avantages de cette invention sont les suivants :
- élargissement de la bande spectrale de mesure, du continu à 50 Hz,
- dynamique permettant de passer de la pression atmosphérique à la variation de quelques millipascals,
- bruit instrumental inférieur au bruit minimum mesuré à la surface de la Terre sur la totalité de la bande utile à la mesure des ondes infrasonores (réf : Bowman, Shields, O'Brien, "Infrasound station ambient noise estimates and models : 2003-2006 ", Infrasound Technology Workshop, Tokyo, Japan, November 13-16, 2007),
- minimisation de la sensibilité thermique, en particulier dans la configuration 2
- déport de l'électronique de détection et d'acquisition grâce aux fibres optiques,
- insensibilité aux perturbations électromagnétiques du fait de la mesure interférométrique optique.

A titre subsidiaire on peut noter qu'un microbaromètre selon l'invention présente un faible encombrement, de sorte qu'il peut être facilement transporté et implanté dans les espaces où l'on veut surveiller les ondes infrasonores. La réduction de sa hauteur le rend nettement moins sensibles aux vibrations mécaniques induites par le vent sur le capteur lui-même.

## Revendications

1. Microbaromètre à soufflet comportant
• un socle de référence (11, 21),
• un soufflet (12, 22) dont un bord est fixé à une surface de référence de ce socle, en présentant une direction d'allongement perpendiculaire à cette surface de référence,
• un couvercle (13, 23) fermant l'autre bord de ce soufflet en sorte de l'isoler de manière étanche vis-à-vis de l'extérieur, le soufflet étant mis dans des conditions dans lesquelles ses variations d'allongement sont directement proportionnelles aux variations de pression induites par des ondes infrasonores autour de lui, **caractérisé en ce qu'**il comporte
• un élément réfléchissant (14, 24) solidaire de ce couvercle
• et un composant interférométrique (16, 26) adapté à pouvoir recevoir un faisceau à partir d'une source et solidaire de la surface de référence du socle en ayant une voie optique d'entrée-sortie en regard de l'élément réfléchissant, parallèlement à la direction d'allongement du soufflet, en sorte de pouvoir émettre vers cet élément une fraction de faisceau et capter ce faisceau après réflexion sur cet élément réfléchissant, ce composant comportant des lignes de guidage optique (31, 33, 34, 39, 36, 41, 42, 44, 45), des zones de séparation et de combinaison optique (32, 38, 35, 40, 43) au sein d'un même substrat, en technologie intégrée, ce composant interférométrique étant formé d'un substrat en silice dont des zones ont été modifiées en sorte de former les dites lignes optiques, les zones de séparation et de combinaison.

2. Microbaromètre selon la revendication 1 dont le soufflet (12) est disposé entre la surface de référence (11) et le composant interférométrique (16), l'élément réfléchissant (14) étant monté sur la face externe du couvercle.

3. Microbaromètre selon la revendication 2, dans lequel le composant interférométrique est rendu solidaire de la surface de référence par l'intermédiaire de colonnettes (11A) disposées autour du soufflet.

4. Microbaromètre selon la revendication 3, dont les colonnettes sont formées d'un mélange de métal et d'invar, suivant des proportions telles que leur coefficient de dilatation thermique perpendiculairement à la surface de référence est sensiblement égal à celui du soufflet.

5. Microbaromètre selon la revendication 1, dont l'élément réfléchissant (24) et le composant interférométrique en optique intégrée (26) sont disposés à l'intérieur du soufflet (22), l'élément réfléchissant (24) étant monté sur la face interne du couvercle et le composant interférométrique longeant la surface de référence (21) du socle.

6. Microbaromètre selon l'une quelconque des revendications 1 à 5, comportant en outre un capot (58) entourant le soufflet et le composant interférométrique, qui est fixé au socle en comportant des orifices (60) d'entrée d'air à l'intérieur de l'enceinte autour du soufflet, ainsi que des conduits de connexion (57) adaptés à permettre une connexion optique à une source de rayonnement monochromatique et cohérent et à un dispositif de traitement de signaux interférométriques.

7. Microbaromètre selon l'une quelconque des revendications 1 à 6, dont le composant interférométrique en optique intégrée comporte une entrée pour un signal d'entrée et quatre sorties, à savoir deux sorties de signaux interférométriques en quadrature, une sortie d'une fraction du signal d'entrée et une sortie du signal réfléchi par l'élément réfléchissant.

8. Microbaromètre selon l'une quelconque des revendications 1 à 7, dans lequel l'élément réfléchissant est un miroir plan.

9. Microbaromètre selon l'une quelconque des revendications 1 à 8, dans lequel le volume du soufflet est à un vide primaire.

## Patentansprüche

1. Mikrobarometer mit Balg aufweisend:
• einen Referenzsockel (11, 21),
• einen Balg (12, 22), von dem ein Rand an einer Referenzfläche dieses Sockels befestigt ist, wobei er eine Dehnungsrichtung aufweist, die zu dieser Referenzoberfläche senkrecht ist,
• einen Deckel (13, 23), der den anderen Rand dieses Balgs in der Form schließt, dass er ihn gegenüber außerhalb abdichtend isoliert, wobei der Balg in Bedingungen versetzt ist, in denen die Veränderungen seiner Dehnung zu den Druckveränderungen, die durch Infraschallwellen um ihn herum induziert werden, direkt proportional sind, **dadurch gekennzeichnet, dass** er Folgendes aufweist:
• ein reflektierendes Element (14, 24), das mit dem Deckel fest verbunden ist,
• und eine interferometrische Komponente (16, 26), die eingerichtet ist, um ausgehend von einer Quelle einen Strahl empfangen zu können, und fest mit der Referenzoberfläche des Sockels verbunden ist, wobei sie einen optischen Eingangs-/Ausgangs-Weg dem reflektierenden Element gegenüber aufweist, parallel zu der Dehnungsrichtung des Balgs, in der Form, dass sie zu diesem Element hin einem Teilstrahl senden kann und diesen Strahl nach Reflexion an diesem reflektierenden Element aufnehmen kann, wobei diese Komponente optische Führungslinien (31, 33, 34, 39, 36, 41, 42, 44, 45), Bereiche für die Trennung und für die optische Kombination (32, 38, 35, 40, 43) im Inneren eines gleichen Substrats, in integrierter Technologie, aufweist, wobei diese interferometrische Komponente von einem Substrat aus Siliziumoxid gebildet ist, von dem Bereiche in der Form modifiziert wurden, dass sie die optischen Linien, die Trennungs- und die Kombinationszonen bilden.

2. Mikrobarometer nach Anspruch 1, bei dem der Balg (12) zwischen der Referenzoberfläche (11) und der interferometrischen Komponente (16) angeordnet ist, wobei das reflektierende Element (14) auf der Außenfläche des Deckels montiert ist.

3. Mikrobarometer nach Anspruch 2, wobei die interferometrische Komponente mit der Referenzoberfläche mittels Säulen (11A) fest verbunden ist, die um den Balg herum angeordnet sind.

4. Mikrobarometer nach Anspruch 3, bei dem die Säulen von einem Gemisch aus Metall und Invar in derartigen Verhältnissen gebildet sind, dass ihr Wärmeausdehnungskoeffizient senkrecht zu der Referenzoberfläche im Wesentlichen gleich dem des Balgs ist.

5. Mikrobarometer nach Anspruch 1, bei dem das reflektierende Element (24) und die interferometrische Komponente in integrierter Optik (26) im Inneren des Balgs (22) angeordnet sind, wobei das reflektierende Element (24) auf der Innenfläche des Deckels montiert und die interferometrische Komponente an der Referenzfläche (21) des Sockels entlang geführt ist.

6. Mikrobarometer nach einem der Ansprüche 1 bis 5, ferner aufweisend eine Haube (58), welche den Balg und die interferometrische Komponente umgibt, die an dem Sockel befestigt ist, wobei sie Öffnungen (60) für den Einlass von Luft in das Innere des Raums um den Sockel herum aufweist, sowie Verbindungsleitungen (57), die so eingerichtet sind, dass sie eine optische Verbindung mit einer monochromatischen und kohärenten Strahlungsquelle und mit einer Vorrichtung zur Verarbeitung interferometrischer Signale gestattet.

7. Mikrobarometer nach einem der Ansprüche 1 bis 6, bei dem die interferometrische Komponente in integrierter Optik einen Eingang für ein Eingangssignal und vier Ausgänge aufweist, das heißt, zwei Ausgänge für interferometrische Signale in Quadratur, einen Ausgang für eine Fraktion des Eingangssignals und einen Ausgang für das durch das reflektierende Element reflektierte Signal.

8. Mikrobarometer nach einem der Ansprüche 1 bis 7, wobei das reflektierende Element ein Flachspiegel ist.

9. Mikrobarometer nach einem der Ansprüche 1 bis 8, wobei das Volumen des Balgs unter Primärvakuum ist.

## Claims

1. Microbarometer with a bellows comprising
• a reference base (11, 21),
• a bellows (12, 22) of which one edge is fastened to a reference surface of that base, while having an elongation direction perpendicular to that reference surface,
• a cover (13, 23) closing the other edge of that bellows so as to isolate it in fluid-tight manner in relation to the exterior, the bellows being placed in conditions in which its variations of elongation are directly proportional to the pressure variations induced by infrasonic waves around it, **characterized in that** it comprises
• a reflective member (14, 24) joined to that cover
• and an interferometric component (16, 26) configured to be able to receive a beam from a source and joined to the reference surface of the base and having an input/output optical path facing the reflective member, parallel to the direction of elongation of the bellows, so as to be able to emit to that member a beam fraction and collect that beam after reflection on that reflective member, that component comprising optical guide lines (31, 33, 34, 39, 36, 41, 42, 44, 45), zones of optical splitting and combining (32, 38, 35, 40, 43) within a same substrate, using integrated technology, the interferometric component being formed from a silica substrate of which the zones have been modified so as to form said optical lines, the separating and combining zones.

2. A microbarometer according to claim 1, of which the bellows (12) is disposed between the reference surface (11) and the interferometric component (16), the reflective member (14) being mounted on the outside face of the cover.

3. A microbarometer according to claim 2, wherein the interferometric component is joined to the reference surface via pillars (11A) disposed around the bellows.

4. A microbarometer according to claim 3, of which the pillars are formed from a mixture of metal and invar, in proportions such that their coefficient of thermal expansion perpendicular to the reference surface is substantially equal to that of the bellows.

5. A microbarometer according to claim 1, of which the reflective member (24) and the integrated optics interferometric component (26) are disposed inside the bellows (22), the reflective member (24) being mounted on the inside face of the cover and the interferometric component being situated along the reference surface (21) of the base.

6. A microbarometer according to any one of claims 1 to 5, further comprising a lid (58) surrounding the bellows and the interferometric component, which is fastened to the base while comprising inlet apertures (60) for inletting air into the enclosed space around the bellows, as well as connection conduits (57) configured to enable an optical connection to a coherent monochromatic source of radiation and to a device for processing interferometric signals;

7. A microbarometer according to any one of claims 1 to 6, of which the integrated optics interferometric component comprises an input for an input signal and four outputs, which are two outputs for interferometric signals in quadrature, one output for an input signal fraction and one output for the signal reflected by the reflective member.

8. A microbarometer according to any one of claims 1 to 7, wherein the reflective member is a planar mirror.

9. A microbarometer according to any one of claims 1 to 8, wherein the volume of the bellows is at a rough vacuum.
